# EUROPÄISCHE PATENTANMELDUNG

(11) **EP 4 703 242 A1**
(43) Veröffentlichungstag der Anmeldung: **04.03.2026**
(21) Anmeldenummer: 24197856.8
(22) Anmeldetag: 02.09.2024
(51) Int. Cl.: B62D 25/20, B60R 13/07, B62D 33/04

(54) **KOFFERAUFBAU EINES NUTZFAHRZEUGS MIT EINER BODENSTRUKTUR**

(71) Anmelder: Schmitz Cargobull AG, 48341 Altenberge (DE)
(72) Erfinder: PHILIPSKÖTTER, André, 48683 Ahaus (DE); AHLER, Wilhelm, 48703 Stadtlohn (DE); KARI, Maxim, 48147 Münster (DE)
(74) Vertreter: Cohausz & Florack

(57) **Zusammenfassung**

Beschrieben und dargestellt ist ein Kofferaufbau (1) eines Nutzfahrzeugs (N), insbesondere Lastkraftwagen, Anhänger oder Sattelauflieger, mit festen Seitenwänden (5), einer festen Stirnwand (4) und einem festen Dach (3), wobei eine Bodenstruktur (2) umfassend einen Ladeboden (9) zum Aufstellen von Ladung, einen Unterboden (11) zum Abschließen der Bodenstruktur (2) nach unten und eine zwischen dem Ladeboden (9) und dem Unterboden (11) vorgesehene Bodenlage (12). Damit nachteilige Effekte bei eindringender Feuchtigkeit in die Bauteile des Kofferaufbaus vermieden oder jedenfalls vermindert werden, ist vorgesehen, dass der Unterboden (11) wenigstens eine Bodenöffnung (10) zum Ablaufen von in den Bereich der Bodenstruktur (2) eingedrungenen Wassers aus dem Kofferaufbau (1) aufweist.

## Beschreibung

Die Erfindung betrifft einen Kofferaufbau eines Nutzfahrzeugs, insbesondere Lastkraftwagen, Anhänger oder Sattelauflieger, mit festen Seitenwänden, einer festen Stirnwand und einem festen Dach, wobei eine Bodenstruktur umfassend einen Ladeboden zum Aufstellen von Ladung, einen Unterboden zum Abschließen der Bodenstruktur nach unten und eine zwischen dem Ladeboden und dem Unterboden vorgesehene Bodenlage.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Nutzfahrzeugaufbauten auf, welche der Aufnahme der zu transportierenden Güter in einem Laderaum dienen. Unter Lastkraftwagen können vorliegend solche verstanden werden, die selbst angetrieben sind und eine Fahrerkabine ebenso aufweisen wie einen Nutzfahrzeugaufbau zur Aufnahme der Ladung. Es kommen aber auch Lastkraftwagen dieser oder einer anderen Art in Frage, die mit einem Anhänger betrieben werden, wobei Lastkraftwagen in einem solchen Gespann, das auch als Lastzug bekannt ist, als Motorwagen bezeichnet werden.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand meist einen Rückwandrahmen mit darin gehaltenen Flügeltüren aufweist, um den Laderaum bedarfsweise von hinten zu beladen. Wenn eine Planeneinheit entlang der Seitenwand verschoben werden kann, spricht man auch von sogenannten Curtainsidern.

Neben den Planenaufbauten sind beispielsweise auch Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Kofferaufbauten weisen oftmals an der Stirnwand, dem Dach und/oder den Seitenwänden zweischalige Paneele auf. Die Paneele umfassen dabei eine äußere strukturgebende Decklage und eine innere strukturgebende Decklage sowie eine dazwischen vorgesehene Kernlage, die typischerweise aus einem, insbesondere geschäumten, Kunststoff gebildet wird. Dabei können die innere und/oder die äußere Decklage selbst bedarfsweise mehrlagig aufgebaut sein. Insbesondere geschäumte Kernlagen oder andere Kernlagen mit einem hohen Luftanteil können für ein hohes Maß an thermischer Isolation des Laderaums sorgen. Die Kernlage kann beispielsweise von einem Matrixelement in Form einer Wabenstruktur gebildet werden, wobei in den Waben Luft mehr oder weniger eingeschlossen ist. Entsprechende Kofferaufbauten werden daher zweckmäßig für Kühltransporte eingesetzt.

Um den Laderaum zu kühlen, weisen diese Nutzfahrzeuge typischerweise Transportkältemaschinen auf, die Luft aus dem Laderaum ansaugen, die angesaugte Luft kühlen und die gekühlte Luft anschließend wieder in den Laderaum zurückblasen. Entsprechende Transportkältemaschinen sind regelmäßig an der Stirnwand des Kofferaufbaus montiert. Mithin werden diese Kofferaufbauten auch als Kühlkofferaufbauten bezeichnet.

Insbesondere bei Kühlkofferaufbauten umfasst die Bodenstruktur des Kofferaufbaus einen Ladeboden zum Aufstellen von zu transportierender Ladung im Laderaum als obere Decklage und einen Unterboden zum Abschließen der Bodenstruktur nach unten als untere Decklage. Zwischen dem Ladeboden und dem Unterboden ist eine Bodenlage vorgesehen. Zur Aussteifung dieser Bodenstruktur weisen die Bodenlagen typischerweise Querträger und teilweise auch Längsträger auf. Zwischen den Querträgern sind regelmäßig Kunststoffelemente vorgesehen, die zur Isolierung des Kofferaufbaus und/oder zur weiteren Aussteifung der Bodenstruktur dienen können, ohne dass dadurch das Gewicht des Kofferaufbaus unnötig zunimmt. Die Kunststoffelemente können beispielsweise als fertige Kunststoffblöcke zwischen die Querträger eingelegt werden oder die Kunststoffelemente werden beispielsweise durch ein Ausschäumen der Zwischenräume der Bodenlage mit einem Kunststoff gebildet.

Kofferaufbauten werden typischerweise so gefertigt, dass in die Bauteile des Kofferaufbaus keine oder jedenfalls wenig Feuchtigkeit eindringen kann. Feuchtigkeit in den Bauteilen des Kofferaufbaus kann zu einer Beschädigung oder zu einer vorzeitigen Ermüdung der Bauteile während des Betriebs der Kofferaufbauten führen. Insbesondere kann es zu Korrosion oder einer anderen Beschädigung bestimmter Materialien der Bauteile des Kofferaufbaus kommen. Im Falle von Kühlkofferaufbauten, reduziert die in entsprechende Bauteile des Kofferaufbaus eingedrungene Feuchtigkeit zudem die thermische Isolation des Kofferaufbaus. Es kommt dabei lokal zu Kältebrücken. Feuchtigkeit kann insbesondere im Verbindungsbereich der Bodenstruktur mit der Stirnwand, den Seitenwänden und bedarfsweise dem Rückwandrahmen eindringen. Gleiches gilt für die Verbindungsbereiche rund um das Dach und die Verbindungsbereiche der Seitenwände mit der Stirnwand und bedarfsweise dem Rückwandrahmen.

Entsprechende Verbindungsbereiche werden daher bei bekannten Kofferaufbauten möglichst feuchtigkeitsdicht ausgebildet. Allerdings lassen sich die bekannten Kofferaufbauten kaum vollständig dicht fertigen. Es besteht immer die Gefahr, dass während des Betriebs, sei es bei starkem Regen oder bei einer ausgiebigen Reinigung des Laderaums unter Verwendung von Wasser, zu einem Eindringen von Feuchtigkeit kommt.

Daher liegt der vorliegenden Erfindung die Aufgabe zugrunde, den Kofferaufbau der eingangs genannten und zuvor näher erläuterten Art derart auszugestalten und weiterzubilden, dass die nachteiligen Effekte bei eindringender Feuchtigkeit in die Bauteile des Kofferaufbaus vermieden oder jedenfalls vermindert werden.

Diese Aufgabe ist bei einem Kofferaufbau nach dem Oberbegriff von Anspruch 1 dadurch gelöst, dass der Unterboden wenigstens eine Bodenöffnung zum Ablaufen von in den Bereich der Bodenstruktur eingedrungenem Wasser aus dem Kofferaufbau aufweist.

Erfindungsmäßig ist mithin erkannt worden, dass durch eine weitere Abdichtung des Kofferaufbaus die durch eingedrungene Feuchtigkeit hervorgerufenen, zuvor angesprochenen Probleme nicht oder nur mit einem sehr hohen Aufwand vermieden werden können. Es wird dagegen vorgeschlagen, eine Bodenöffnung im Unterboden zum Ablaufen von Wasser bereitzustellen, das aus welchen Gründen auch immer in den Bereich der Bodenstruktur eingedrungen ist. Gemeint ist hiermit nicht etwa in den Laderaum eingebrachtes Wasser, sondern in die Bauteilstruktur des Kofferaufbaus eingedrungenes Wasser. Das Wasser kann mithin beispielsweise in eine Seitenwand, die Stirnwand, das Dach und/oder die Bodenstruktur sowie in wenigstens einen Verbindungsbereich der vorgenannten Bauteile eingedrungen sein. Zudem ist das Wasser auf welchem Wege auch immer zum Unterboden und dort zur Bodenöffnung gelangt.

Der Erfindung liegt die Erkenntnis zugrunde, dass Wasser, wenn es denn schon nicht am Eindringen in die Bauteilstruktur des Kofferaufbaus gehindert werden kann, wenigstens wieder abfließen soll, um weitere Schäden am Kofferaufbau zu vermeiden. Dazu wird die Bodenstruktur, insbesondere der Unterboden, des Kofferaufbaus gezielt und bewusst geöffnet, was bisher gerade vermieden werden sollte, um ein Eindringen beispielsweise von Spritzwasser zu verhindern.

Die Bodenöffnung ist dabei bewusst so ausgebildet, dass über die Bodenöffnung in wenigstens eine Seitenwand, die Stirnwand, das Dach, die Bodenstruktur und/oder in wenigstens einen Verbindungsbereich der vorgenannten Bauteile, also über die Schnittstellen der genannten Bauteile des Kofferaufbaus, eingedrungene Feuchtigkeit ablaufen kann. Insbesondere die Schnittstellen des Kofferaufbaus sind anfällig für eindringendes Wasser. Es handelt sich also nicht um eine Bodenöffnung, die es primär erlauben würde, Wasser aus dem Laderaum ablaufen zu lassen, das beispielsweise beim Reinigen des Laderaums in den Laderaum eingebracht wird. Direkt mit dem Laderaum kommunizierende Bodenöffnungen können zusätzlich vorgesehen und im normalen Betrieb insbesondere mit einem Stopfen verschlossen sein. Das Verschließen der erfindungsgemäßen Bodenöffnungen ist möglich, wird aber in den meisten Fällen wohl nicht bevorzugt sein.

Die in die Bauteile des Kofferaufbaus eindringende Feuchtigkeit, sammelt sich tendenziell im Bereich der Bodenlagen. Dies gilt für in die Bodenstruktur eindringende Feuchtigkeit ebenso wie für die Feuchtigkeit, die in das Dach, die Seitenwände, die Stirnwand und/oder die Verbindungsbereiche oder Schnittstellen dieser Bauteile eindringt. Aus diesem Grunde ist es besonders effizient, eine Bodenöffnung zum Ablaufen von Wasser in den Unterboden der Bodenstruktur zu integrieren. Aus einer derartig vorgesehenen Öffnung kann das ablaufende Wasser zudem zweckmäßig an die Umgebung abgegeben werden.

Bei einer ersten besonders bevorzugten Ausgestaltung des Kofferaufbaus sind die Seitenwände, die Stirnwand und/oder das Dach aus einem Paneel gebildet. Das entsprechende Paneel kann dabei jeweils eine innere strukturgebende Decklage, eine äußere strukturgebende Decklage und eine zwischen der inneren Decklage und der äußeren Decklage vorgesehene Kernlage umfassen. Die strukturgebenden Decklagen können selbst bedarfsweise mehrlagig ausgebildet sein. Die strukturgebenden Decklagen umfassen vorzugsweise wenigstens eine Lage aus Stahlblech, Aluminium oder einem, insbesondere faserverstärkten, Kunststoff, um eine hinreichende Stabilität, Steifigkeit und Widerstandsfähigkeit der entsprechenden Decklage bereitzustellen. Bei der Kernlage handelt es sich bevorzugt um eine Kernlage aus Kunststoff, insbesondere einem geschäumten Kunststoff oder einer Luft einschließenden Kunststoffmatrix. Entsprechende Kernlagen sind insbesondere bei Kühlkofferaufbauten zur thermischen Isolierung zweckmäßig. Bei entsprechenden Kofferaufbauten ist eindringende Feuchtigkeit besonders unerwünscht, da die Isolationswirkung der Paneele durch eingedrungene Feuchtigkeit stark herabgesetzt werden kann.

Bei einem als Kühlkofferaufbau ausgebildeten Kofferaufbau kann der Kofferaufbau eine Transportkältemaschine zum Ansaugen von Luft aus einem Laderaum des Kofferaufbaus, Herunterkühlen der angesaugten Luft und Einblasen der heruntergekühlten Luft zurück in den Laderaum aufweisen. Entsprechende Transportkältemaschinen sind dann bevorzugt von außen an der Stirnwand des Kofferaufbaus montiert.

Für ein effektives und rasches Ableiten von in die Bauteilstruktur des Kofferaufbaus eingedrungenen Wassers bietet es sich an, wenn die wenigstens eine Bodenöffnung in wenigstens einem Randbereich der Bodenstruktur vorgesehen ist. Dorthin wird die Feuchtigkeit bedarfsweise über die Seitenwände und/oder die Stirnwand in die Bodenstruktur eingeleitet. Die Feuchtigkeit kann dort mithin besonders schnell in Form von Wasser abgeleitet werden. Zudem kann so verhindert werden, dass das Wasser in die Bodenlage eindringt. Dort kann das Wasser zu weiteren Nachteilen führen und im Übrigen schwieriger zu entfernen sein.

Im vorstehend diskutierten Zusammenhang kann es besonders bevorzugt sein, wenn die wenigstens eine Bodenöffnung in einer Richtung wenigstens im Wesentlichen senkrecht zur Bodenstruktur unterhalb der Stirnwand, einer Seitenwand und/oder einem Rückwandrahmen vorgesehen ist. Wenn die Feuchtigkeit über die Stirnwand, die Seitenwand und/oder über den Rückwandrahmen nach unten in Richtung der Bodenstruktur geleitet wird, lässt sich die Feuchtigkeit besonders einfach und schnell in Form von Wasser aus dem Kofferaufbau entfernen, wenn die Bodenöffnung in vertikaler Richtung bzw. in einer Richtung wenigstens im Wesentlichen senkrecht zur Bodenstruktur unter der Stirnwand, der Seitenwand und/oder dem Rückwandrahmen angeordnet ist.

Wenn vorliegend die Begriffe vertikal, unterhalb, oberhalb und seitlich oder dergleichen verwendet werden, dann wird davon ausgegangen, dass die Bodenstruktur des Kofferaufbaus horizontal ausgerichtet ist. Der Kofferaufbau kann im Betrieb aber selbstverständlich auch abweichende Ausrichtungen aufweisen. Die Begriffe vertikal, unterhalb, oberhalb und seitlich oder dergleichen erleichtern jedoch vorliegend das Verständnis der Erfindung und von deren bevorzugten Ausgestaltungen. Nichts destotrotz werden vorliegend bestimmte Richtungen auch in Bezug zur Ausrichtung der Bodenstruktur gesetzt. Diese Richtungen sind dann unabhängig davon, ob der Kofferaufbau parallel zur Horizontalen ausgerichtet ist oder nicht.

Es wurde festgestellt, dass sich die Feuchtigkeit in den Bauteilen des Kofferaufbaus in bestimmten Bereichen der Bodenstruktur sammelt. Dies ist darauf zurückzuführen, dass die Kofferaufbauten im Betrieb nicht immer parallel zur Horizontalen ausgerichtet und zudem ergänzenden Kräften ausgesetzt sind, welche durch Beschleunigungen während des Fahrens, etwa beim Anfahren, Bremsen und in Kurven, bewirkt werden. Daher wird die wenigstens eine Bodenöffnung bevorzugt in wenigstens einem Eckbereich der Bodenstruktur vorgesehen sein. Denn in solchen Eckbereichen sammelt sich in vielen Fällen die Feuchtigkeit des Kofferaufbaus. Alternativ oder zusätzlich kann die wenigstens eine Bodenöffnung in einem Verbindungsbereich zwischen der Bodenstruktur der Stirnwand, einer Seitenwand und/oder einem Rückwandrahmen vorgesehen sein. In diesen Verbindungsbereichen werden Spalte und Hohlräume gebildet, in denen sich Wasser besonders gut sammeln und daher von dort auch besonders gut abgeleitet werden kann.

Um die Bodenlage vor dem Eindringen von übermäßigen Mengen an Feuchtigkeit zu schützen, bietet es sich zudem an, wenn die wenigstens eine Bodenöffnung seitlich neben der Bodenlage, insbesondere neben einem Querträger, vorgesehen ist. Dies ist in besonderem Maße nützlich, wenn die Bodenlage Querträger und Kunststoffelemente zwischen den Querträgern aufweist. Dies ist oft bei Kühlkofferaufbauten der Fall, deren Isolationseigenschaften verringert werden, wenn Feuchtigkeit in die Bodenlage eindringt. Unabhängig davon ist Feuchtigkeit schwieriger zu entfernen, wenn sie erst in den Kunststoff der Bodenlage eingedrungen ist. Nicht zuletzt ist auch zu berücksichtigen, dass die Querträger der Bodenlage meist von Holzbalken gebildet werden, deren Haltbarkeit durch Feuchtigkeit in der Bodenlage stark verringert werden kann.

Um zu vermeiden, dass über die Bodenöffnung Spritzwasser oder dergleichen in die Bodenlage bzw. die Bauteile des Kofferaufbaus eindringen kann, kann in der Bodenöffnung ein Drainageelement vorgesehen sein. Andernfalls könnte die Verwendung einer Bodenöffnung die mit eindringender Feuchtigkeit verbundenen Probleme noch verstärken. Um dies zu vermeiden, weist das Drainageelement einen eine Einlauföffnung mit einer Ablauföffnung verbindenden Drainagekanal zum Ablaufen von Wasser auf. Der Drainagekanal kann dabei bevorzugt so gebogen ausgebildet sein, dass keine direkte, geradlinige Verbindung zwischen Einlauföffnung und Ablauföffnung über den Drainagekanal besteht. Jedenfalls kann eine solche direkte geradlinige Verbindung zwischen Einlauföffnung und Ablauföffnung durch den Drainagekanal in einer Richtung senkrecht zur Bodenstruktur durch die Ausgestaltung des Drainagekanals verhindert sein. Spritzwasser gelangt also nicht oder allenfalls bedingt in die Bodenstruktur hinein. Spitzwasser kann dann zwar durch die Ablauföffnung in das Drainageelement eindringen, das Spitzwasser gelangt dann aber allenfalls bedingt durch das Drainageelement bis zur Einlauföffnung. Das Spritzwasser wird vielmehr um das Drainageelement umgeleitet und wieder aus dem Drainageelement abgeleitet. In diesem Zusammenhang ist es besonders bevorzugt, wenn die Einlauföffnung bezogen auf den Kofferaufbau weiter vorne angeordnet ist als die Ablauföffnung und/oder sich der Drainagekanal ausgehend von der Ablauföffnung wenigstens abschnittsweise bezogen auf den Kofferaufbau nach vorne erstreckt. Damit Spritzwasser von der Ablauföffnung zu Einlauföffnung zu gelangen kann, muss dieses also abschnittsweise entgegen der Fahrtrichtung durch den Drainagekanal gelangen. Dies hilft, ein Eindringen von Spritzwasser durch das Drainageelement hindurch in die Bodenstruktur zu vermeiden.

Um ein Eindringen von Spritzwasser durch den Drainagekanal des Drainageelements in die Bodenstruktur zu vermeiden, bietet es sich an, wenn die Einlauföffnung in einer Richtung senkrecht zur Bodenstruktur gesehen vollständig neben der Ablauföffnung vorgesehen ist. Spritzwasser kann also nicht einfach senkrecht durch den Drainagekanal in die Bodenstruktur strömen. Vielmehr müsste das Spritzwasser dazu wenigstens abschnittsweise seitwärts geleitet werden. Dabei kann das Spritzwasser dann aber an die Wände des Drainagekanals gelangen und anschließend dem Drainagekanal folgend zur Ablauföffnung fließen. Um dies zu erreichen, wird zwar bedarfsweise die Strömung des abzuführenden Wassers im Drainageelement wenigstens einmal umgelegt, allerdings kann dies ohne Weiteres toleriert werden. Es ist nicht von besonderer Bedeutung, dass das Wasser den Drainagekanal des Drainageelements besonders schnell oder besonders einfach in Richtung der Ablauföffnung passieren kann. Viel wichtiger ist, dass kein Spritzwasser von außen durch den Drainagekanal in die Bodenstruktur eindringt. Gewünscht ist ferner, dass das Wasser aus der Bauteilstruktur des Kofferaufbaus zeitnah abgeführt werden kann, etwa beim Warten an einer Ampel oder im abgesattelten Zustand des Nutzfahrzeugs, so dass das Wasser nicht in die Bodenlage eindringt. Dort können beispielweise aus Holzbalken gebildete Querträger durch das eindringende Wasser geschädigt werden.

Unabhängig davon, ob die Einlauföffnung und die Ablauföffnung senkrecht zur Bodenstruktur gesehen nebeneinander und nicht überlappend vorgesehen sind, kann ein Eindringen von Spritzwasser durch den Drainagekanal verhindert werden, wenn der Drainagekanal wenigstens einen wenigstens im Wesentlichen parallel zur Bodenstruktur verlaufenden Kanalabschnitt aufweist. Das Spritzwasser, das typischerweise nicht in einer Richtung parallel zur Bodenstruktur in das Drainageelement hineingelangt, wird mit hoher wahrscheinlich vor dem Eintritt in den parallel zur Bodenstruktur ausgerichteten Kanalabschnitt oder in diesem Kanalabschnitt mit einer Wand des Drainagekanals in Kontakt kommen. Das Spritzwasser wird dann an der Wand des Drainagekanals herunterfließen und damit nicht bis zur Einlauföffnung des Drainageelements vordringen. Je nach Länge des Kanalabschnitts und weiterer Elemente des Drainageelements kann der wenigstens im Wesentlichen parallel zur Bodenstruktur verlaufende Kanalabschnitt bis 15°, vorzugsweise bis zu 10°, insbesondere bis zu 5° gegenüber der Ebene der Bodenstruktur geneigt sein. Eine geringfügige Neigung des Kanalabschnitts kann dabei dem Ablaufen des Wassers aus dem Drainageelement dienen.

Dies gilt insbesondere dann, wenn der wenigstens im Wesentlichen parallel zur Bodenstruktur verlaufende Kanalabschnitt unterhalb der Einlauföffnung und oberhalb der Ablauföffnung vorgesehen ist. Um überhaupt in den wenigstens im Wesentlichen parallel zur Bodenstruktur verlaufenden Kanalabschnitt eindringen zu können, muss das Spritzwasser durch die Ablauföffnung nach oben in das Drainageelement hineingelangen. Gleichwohl muss das Spritzwasser aber ohne mit den Wandungen des wenigstens im Wesentlichen parallel zur Bodenstruktur verlaufenden Kanalabschnitts durch diesen Kanalabschnitt hindurchtreten und anschließend dennoch weiter nach oben zur Einlauföffnung des Drainageelements gelangen, um in die Bodenstruktur eindringen zu können ohne sofort wieder aus der Auslauföffnung herauszulaufen.

Die Strömungsrichtung des durch die Einlauföffnung in den Drainagekanal einströmenden Wassers wird bei entsprechenden Drainageelementen wenigstens zweifach umgeleitet. Die Strömungsrichtung ist vor dem wenigstens im Wesentlichen parallel zur Bodenstruktur ausgerichteten Kanalabschnitt wenigstens im Wesentlichen nach unten gerichtet und wird anschließend in eine Richtung wenigstens im Wesentlichen parallel zur Bodenstruktur umgelenkt. In dieser Richtung fließt das Wasser dann durch den in gleicher Richtung ausgerichteten Kanalabschnitt.

Danach erfolgt eine weitere Strömungsumlenkung des Wassers, und zwar in diesem Falle nach unten, um aus der Ablauföffnung ablaufen zu können. Weitere Strömungsumlenkungen sind denkbar und erschweren es dem Spritzwasser zusätzlich, bis in die Bodenstruktur einzudringen. Gleichfalls sind entsprechende Strömungsumlenkungen besonders effektiv, wenn die Umlenkung der Strömung jeweils möglichst ausgeprägt ist.

Alternativ oder zusätzlich zu einem sich wenigstens im Wesentlichen parallel zur Bodenstruktur erstreckenden Kanalabschnitt kann es aus dem zuvor erläuterten Grund zweckmäßig und daher bevorzugt sein, wenn der Drainagekanal derart ausgebildet ist, dass die Strömungsrichtung des ablaufenden Wassers entlang des Drainagekanals wenigstens zweimal, insbesondere dreimal, um wenigstens 45°, vorzugsweise wenigstens 70°, insbesondere um etwa 90°, umgelenkt wird. Je mehr Umlenkungen vorgesehen sind und je stärker die Strömung des ablaufenden Wassers entlang der Umlenkungen im Drainagekanal umgelenkt wird, desto schwieriger ist es für Spritzwasser, von unten durch das Drainageelement nach oben in die Bodenstruktur einzudringen, und desto mehr kann der wenigstens im Wesentlichen parallel zur Bodenstruktur ausgerichtete Kanalabschnitt gegenüber der Bodenstruktur geneigt sein, ohne dass Spritzwasser in die Bodenstruktur eindringt.

Wenn in einer Richtung senkrecht über der Ablauföffnung ein seitlich und nach oben geschlossener Kanalabschnitt vorgesehen ist, kann dies dazu dienen, Spritzwasser von der Bodenstruktur fernzuhalten. Das Spritzwasser kann von unten nach oben durch die Ablauföffnung in das Drainageelement eindringen. Dabei kann das Spritzwasser, je nachdem in welche Richtung es in das Drainageelement hineinspritzt, in den seitlich und nach oben geschlossenen Kanalabschnitt gelangen. Dort spritzt das Spritzwasser dann oben oder seitlich an die Wandung des Kanalabschnitts. Anschließend läuft das Wasser wenigstens im Wesentlichen in der Schwerkraftrichtung wieder in Richtung der Ablauföffnung und aus dieser aus dem Drainageelement hinaus.

Dies ist besonders effektiv, wenn der geschlossene Kanalabschnitt oberhalb des parallel zur Bodenstruktur verlaufenden Kanalabschnitts vorgesehen ist. Das Spritzwasser kann aus dem geschlossenen Kanalabschnitt nur sehr bedingt in den parallel zur Bodenstruktur ausgerichteten Kanalabschnitt eindringen, weshalb das Spritzwasser sehr gut von einem Eindringen in die Bodenlage ferngehalten wird.

Dabei kann es sich der Kompaktheit des Drainageelements halber und aus Kostengesichtspunkten anbieten, wenn der parallel zur Bodenstruktur verlaufende Kanalabschnitt wenigstens im Wesentlichen an den geschlossenen Kanalabschnitt angrenzt. Das Drainageelement muss dann weder übermäßig groß noch übermäßig komplex ausgebildet werden.

Alternativ oder zusätzlich kann der geschlossene Kanalabschnitt in Richtung der Einlauföffnung und/oder in Richtung des parallel zur Bodenstruktur verlaufenden Kanalabschnitts eine Prallwand für von unten in das Drainageelement spritzende Flüssigkeit bilden. Spritzwasser, das gegen diese Prallwand spritzt, wird an der Prallwand abgeschieden und fließt sodann zurück in Richtung der Ablauföffnung. Die Prallwand kann zudem wenigstens abschnittsweise in Richtung der Ablauföffnung geneigt sein, um Spritzwasser wegzuhalten von dem wenigstens im Wesentlichen parallel zur Bodenstruktur ausgerichteten Kanalabschnitt und/oder von der Einlauföffnung des Drainageelements.

Für ein kompaktes und kostengünstiges Drainageelement kann es sich anbieten, wenn die Einlauföffnung zur Seite oder nach oben weist. Alternativ oder zusätzlich kann aus demselben Grund die Ablauföffnung nach unten weisen. Auch wenn die Einlauföffnung nach oben weist, sollte Wasser trotzdem leicht seitlich vom Unterboden in die Einlauföffnung laufen können.

Damit das Drainageelement während des Betriebs des Kofferaufbaus nicht beschädigt werden kann, bietet es sich an, dass die Unterseite des Drainageelements oberhalb der Unterseite des Unterbodens oder wenigstens bündig mit der Unterseite des Unterbodens abschließend vorgesehen ist. Das Drainageelement steht also nicht gegenüber dem Unterboden nach unten vor, so dass das Drainageelement beispielsweise durch einen Kontakt mit einem Hindernis, etwa beim Aufsatteln des den Kofferaufbau tragenden Nutzfahrzeugs, abgeschert werden kann.

Alternativ oder zusätzlich können die Bodenöffnung und das Drainageelement derart korrespondierend zueinander ausgebildet sein, dass eine einzige definierte Einbaulage des Drainageelements vorgeben ist. Es ist dann nicht möglich, das Drainageelement versehentlich so zu verbauen, dass die Einlauföffnung unten und die Ablauföffnung oben ist. Auch wird so verhindert, dass der vordere Rand des Drainageelements bei der Montage des Drainageelements versehentlich hinten angeordnet wird und umgekehrt. Dies kann beispielsweise dadurch erreicht werden, dass das Drainageelement an einer Seite mit einer vorstehenden Nase versehen ist, die in eine entsprechende Aussparung im Unterboden eingreifen kann. Denkbar ist auch, dass das Drainageelement und die Aufnahme im Unterboden eine breitere Seite und eine schmalere Seite aufweisen. Auch können das Drainageelement und die Aufnahme im Unterboden korrespondierend konisch ausgebildet sind.

Nachfolgend wird die Erfindung anhand einer lediglich ein Ausführungsbeispiel darstellenden Zeichnung näher erläutert. In der Zeichnung zeigt
- Fig. 1: ein Nutzfahrzeug mit einem erfindungsgemäßen Kofferaufbau in einer perspektivischen Ansicht,
- Fig. 2A-B: ein Detail einer Bodenstruktur des Kofferaufbaus aus Fig. 1 in perspektivischen Ansichten von oben und unten,
- Fig. 3A-B: das Drainageelement der Fig. 2 in einer perspektivischen Ansicht und in einer Schnittansicht.

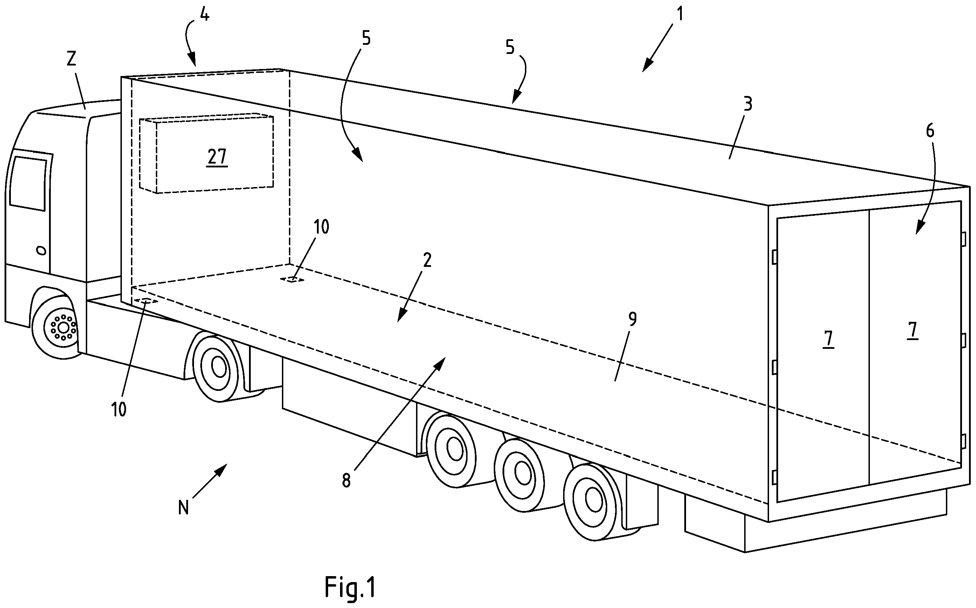

In der Fig. 1 ist ein von einer Zugmaschine Z gezogenes Nutzfahrzeug N in Form eines Sattelaufliegers dargestellt. Das Nutzfahrzeug N weist dabei einen Kofferaufbau 1 mit einer festen Bodenstruktur 2, einem festen Dach 3, einer festen Stirnwand 4, festen Seitenwänden 5, einem festen Rückwandrahmen 6 und darin gehaltenen Türen 7 auf. Die Bodenstruktur 2 ist vorne mit der Stirnwand 4, seitlich mit den Seitenwänden 5 und hinten mit dem Rückwandrahmen 6 verbunden. Die Stirnwand 4, das Dach 3 und die Seitenwände 5 des Kofferaufbaus 1 weisen jeweils eine äußere strukturgebende Decklage und eine zum Laderaum 8 weisende innere strukturgebende Decklage auf. Die strukturgebenden Decklagen des dargestellten und insoweit bevorzugten Kofferaufbaus 1 umfassen eine Lage aus Stahlblech, wobei beispielsweise auch eine Lage aus faserverstärktem Kunststoff oder Aluminium denkbar wäre. Zwischen den Decklagen befindet sich jeweils eine Kernlage aus einem geschäumten Kunststoff. Entsprechende Paneele sind grundsätzlich bekannt, weshalb es entbehrlich ist, die Paneele im Detail darzustellen. Die Bodenstruktur 2 des Kofferaufbaus 1 stellt einen Ladeboden 9 und den vorderen Ecken der Bodenstruktur 2 zugeordnete Bodenöffnungen 10 zum Ablaufen von in die Bauteilstruktur des Kofferaufbaus 1 umfassend die Bodenstruktur 2, das Dach 3, die Stirnwand 4, die Seitenwänden 5 und den Rückwandrahmen 6, eingedrungener Feuchtigkeit und/oder eingedrungenen Wassers bereit. An der Stirnwand des Kofferaufbaus ist eine Transportkältemaschine 27 zum Ansaugen von Luft aus einem Laderaum 8 des Kofferaufbaus 1, Herunterkühlen der angesaugten Luft und Einblasen der heruntergekühlten Luft zurück in den Laderaum 8 vorgesehen. Der Kofferaufbau 1 kann mithin auch als Kühlkofferaufbau bezeichnet werden.

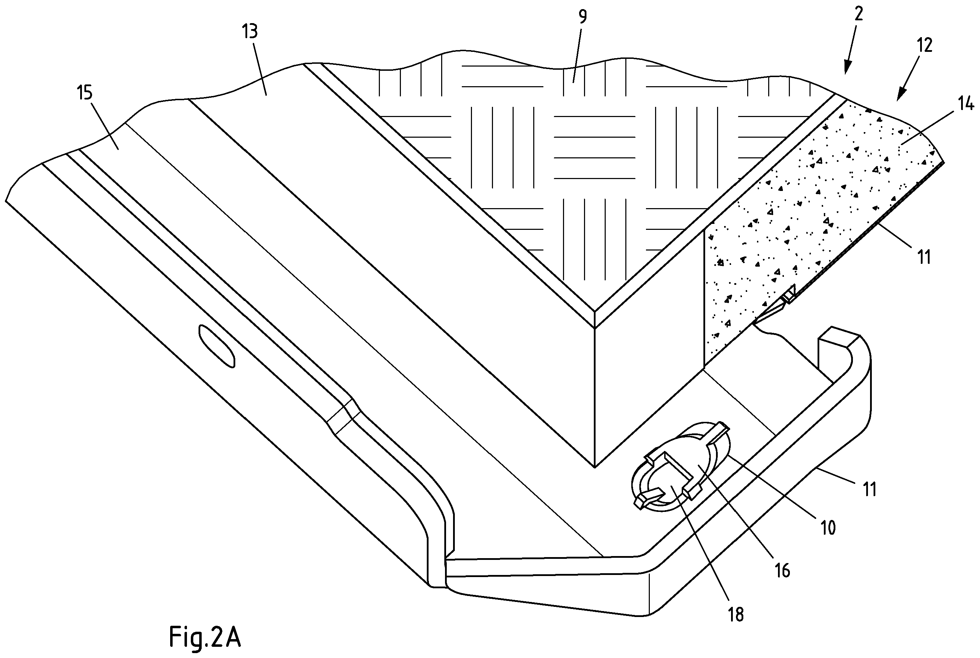

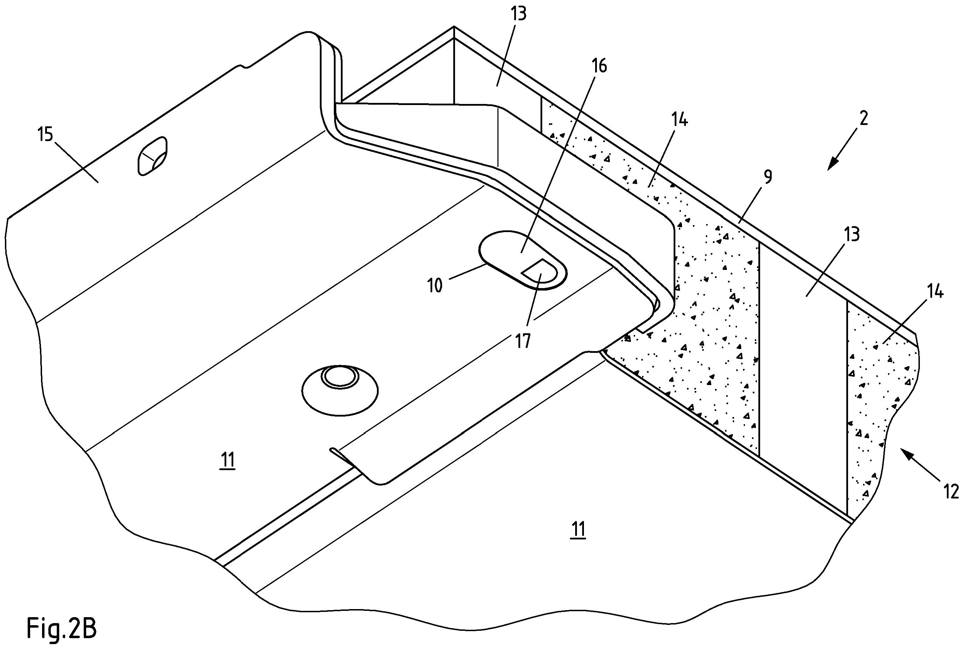

In den Fig. 2A-B ist ein Detail der Bodenstruktur 2 im Bereich der vorderen linken Ecke des Kofferaufbaus 1 dargestellt. Die Bodenstruktur 2 weist an ihrer Oberseite den Ladeboden 9 zum Aufstellen von Ladung im Laderaum 8 auf. An der Unterseite ist ein Unterboden 11 vorgesehen, der die Bodenstruktur 2 nach unten abschließt sowie ein Eindringen von Feuchtigkeit in die Bodenlage 12 der Bodenstruktur 2 verhindert und die Bodenlage 12 vor einer mechanischen Beschädigung schützt. Bei der Bodenlage 12 handelt es sich bei dem dargestellten und insoweit bevorzugten Kofferaufbau 1 um eine zwischen dem Ladeboden 9 und dem Unterboden 11 vorgesehene Lage aus über die Länge der Bodenlage 12 verteilt angeordneten Querträgern 13, als lasttragende Elemente der Bodenlage 12, zwischen denen jeweils ein Kunststoffelement 14, insbesondere aus geschäumtem Kunststoff, vorgesehen ist. Der Kunststoff trägt dabei allenfalls einen untergeordneten Teil der Last. Bei der dargestellten und insoweit bevorzugten Bodenstruktur 2 sind die Zwischenräume zwischen den Querträgern 13 unter Bildung der, bedarfsweise untereinander verbundenen, Kunststoffelemente 14 mit dem entsprechenden Kunststoff ausgeschäumt und sind die Querträger 13 aus Holz gefertigt.

Am vorderen Ende der Bodenstruktur 2, mithin im Bereich der Stirnwand 4, ist ferner eine sogenannte Anfahrnase 15 vorgesehen, welche einen Teil des Unterbodens 11 bildet und den Aufsattelbereich des Kofferaufbaus 1 vor Beschädigung im Falle des Aufsattelns und Absattelns des Nutzfahrzeugs N durch die Zugmaschine Z schützt. Die Anfahrnase 15 steht nach vorne und zur Seite gegenüber der Bodenlage 12 vor. In diesem Bereich sind die Stirnwand 4 und die Seitenwände 5 mit der Bodenstruktur 2 verbunden. Die Stirnwand 4 und die Seitenwände 5 sind der besseren Anschaulichkeit halber nicht dargestellt. Seitlich neben dem vorderen Querträger 13 ist im Unterboden 11, vorliegend in der Anfahrnase 15, eine Bodenöffnung 10 vorgesehen, über welche Wasser aus dem angrenzenden Bereich der Bodenstruktur 2 aus dem Kofferaufbau 1 nach unten ablaufen kann. Die Bodenöffnung 10 ist dort vorgesehen, weil sich das Wasser oftmals im Verbindungsbereich von Stirnwand 4, Seitenwand 5 und Bodenstruktur 2 sammelt und weil so ein zeitnahes, unmittelbares und/oder direktes Abfließen des Wassers erfolgen kann, womit verhindert wird, dass das Wasser in die Bodenlage 12 eindringt.

In die Bodenöffnung 10 ist ein Drainageelement 16 eingesetzt, das nach unten bündig mit dem Unterboden 11 abschließt oder leicht versenkt ist. An der Unterseite des Drainageelements 16 ist eine nach unten weisende Ablauföffnung 17 zum Ablaufen des in das Drainageelement 16 eingedrungenen Wassers vorgesehen. Dem oberen Ende des Drainageelements 16 zugeordnet ist eine Einlauföffnung 18 vorgesehen.

Zudem ist das Drainageelement 16 am hinteren Ende schmaler ausgebildet als am vorderen Ende.

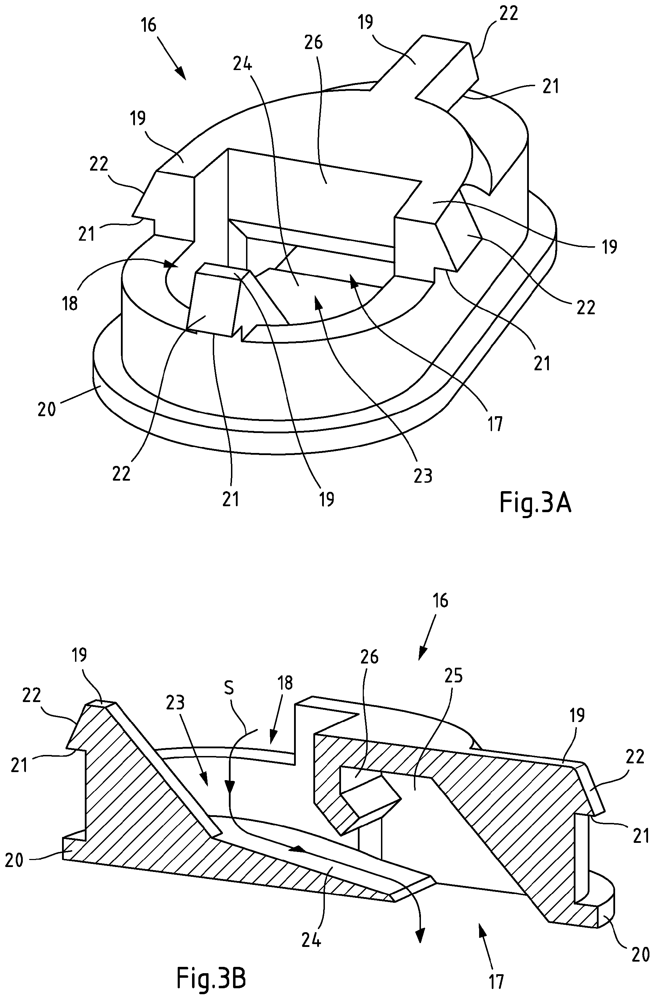

Das in die Bodenöffnung 10 eingesetzte Drainageelement 16 ist in den Fig. 3A-B in einer perspektivischen Draufsicht und einer perspektivischen Schnittansicht dargestellt. Dem oberen Ende des Drainageelements 16 sind Stege 19 zugeordnet. Zudem weist das untere Ende des Drainageelements 16 einen Rand 20 auf. Dies sorgt zusammen mit der angesprochenen Verjüngung des Drainageelements 16 am hinteren Ende dafür, dass das Drainageelement nur in der dargestellten Ausrichtung in die Bodenöffnung eingesetzt werden kann und dort auch zuverlässig in Position bleibt.

Im in die Bodenöffnung 10 des Unterbodens 11 eingesetzten Zustand des Drainageelements 16 ist der untere Rand 20 des Drainageelements 16 in einer korrespondierenden Aussparung im Unterboden 11 aufgenommen, um einen bündigen unteren Abschluss zwischen Unterboden 11 und Drainageelement 16 bereitzustellen. Der obere Rand des Unterbodens 11 erstreckt sich bis an die unteren Anschlagflächen 21 der dem oberen Ende des Drainageelements 16 zugeordneten Stege 19 heran. Die Stege 19 weisen zudem seitlich nach unten weisende Abschrägungen 22 auf, welche es erlauben, das Drainageelement 16 von unten in die Bodenöffnung 10 einzustecken und über eine Rastverbindung in der Bodenöffnung 10 festzulegen.

Die Einlauföffnung 18 des dargestellten und insoweit bevorzugten Drainageelements 16 endet seitlich auf Höhe des Unterbodens 11. Wasser kann also vom Unterboden 11 nahezu ungehindert in die Einlauföffnung 18 eindringen. Zudem kann Wasser unmittelbar von oben aus der Seitenwand 5, der Stirnwand 4 und/oder den Schnittstellen von Seitenwand 5 und Stirnwand 4 untereinander oder mit der Bodenstruktur 2 in die Einlauföffnung 18 gelangen, was jedoch bedarfsweise entbehrlich ist. Die Einlauföffnung 18 ist mit einem Drainagekanal 23 mit der Ablauföffnung 17 am unteren Ende des Drainageelements 16 verbunden. Um Spritzwasser an einem Eindringen in die Bodenstruktur 2 zu hindern, stellt der Drainagekanal 23 keine geradlinige Verbindung zwischen der Ablauföffnung 17 und der Einlauföffnung 18 bereit. Eindringendes Spritzwasser gelangt daher an eine Wandung des Drainagekanals 23 und läuft dann entlang des Drainagekanals 23 in Richtung der Ablauföffnung 17.

Bei dem dargestellten und insoweit bevorzugten Drainageelement 16 ist in vertikaler Richtung gesehen unterhalb der Einlauföffnung 18 und oberhalb der Ablauföffnung 17 ein wenigstens im Wesentlichen parallel zur Bodenstruktur 2 ausgerichteter Kanalabschnitt 24 vorgesehen. Der Kanalabschnitt 24 nimmt dabei einen Winkel zur Bodenstruktur von weniger als 10° ein. Andere Winkel sind denkbar. In einer Projektion von Einlauföffnung 18 und Ablauföffnung 17 in einer Projektionsebene parallel zur Bodenstruktur 2 sind die Einlauföffnung 18 und Ablauföffnung 17 nebeneinander und nicht gegenseitig überlappend vorgesehen. In einer Richtung parallel zur Bodenstruktur 2 sind die Einlauföffnung 18 und die Ablauföffnung 17 über den wenigstens im Wesentlichen parallelen Kanalabschnitt 24 miteinander verbunden.

Infolge des Drainagekanals 23 wird das seitlich vom Unterboden 11 in die Einlauföffnung 18 eintretende Wasser zunächst von einer Strömung wenigstens etwa parallel zur Bodenstruktur 2 um etwa 90° in eine Strömung nach unten, also wenigstens im Wesentlichen senkrecht zur Bodenstruktur 2, umgelenkt. Anschließend erfolgt eine erneute Umlenkung der Strömung um nahezu 90° in Richtung der Ablauföffnung 17, in der die Strömung des Wassers eine erneute Umlenkung um gut 90° nach unten erfährt. Die entsprechende Strömung S des Wassers ist schematisch in der Fig. 3B eingetragen.

Oberhalb der Ablauföffnung 17 ist bei dem dargestellten und insoweit bevorzugten Drainageelement 16 ein nach oben und zur Seite geschlossener Kanalabschnitt 25 vorgesehen, in den Spritzwasser von unten durch die Ablauföffnung 17 eindringen und aus dem Spritzwasser nur nach unten abfließen kann. Dabei verlässt das abfließende Spritzwasser das Drainageelement 16 wieder über die Ablauföffnung 17. Der geschlossene Kanalabschnitt 25 ist dabei in einer Richtung senkrecht zur Bodenstruktur 2 gesehen oberhalb das wenigstens im Wesentlichen parallel zur Bodenstruktur 2 ausgerichteten Kanalabschnitts 24 und angrenzend zu diesem angeordnet. Dabei weist der geschlossene Kanalabschnitt 25 in Richtung des wenigstens im Wesentlichen parallel zur Bodenstruktur 2 ausgerichteten Kanalabschnitts 24 eine Prallwand 26 auf, gegen die Spritzwasser prallen kann, das so an einem Passieren des wenigstens im Wesentlichen parallel zur Bodenstruktur 2 ausgerichteten Kanalabschnitts 24 gehindert wird. Der untere Teil der Prallwand 26 ist zudem in Richtung der Ablauföffnung 17 geneigt, so dass das gegen die Prallwand 26 spritzende Spritzwasser in Richtung der Ablauföffnung 17 abfließt. Bedarfsweise könnte aber auch ein oberer Abschnitt der Prallwand oder auch die gesamte Prallwand in Richtung der Ablauföffnung 17 geneigt sein. Um das Eindringen von Spritzwasser weiter zu erschweren, ist die Ablauföffnung 17 in Fahrtrichtung des Nutzfahrzeugs N hinter der Einlauföffnung 18 vorgesehen. Mit anderen Worten, die Einlauföffnung 18 ist weiter vorne angeordnet als die Ablauföffnung 17.

### Bezugszeichenliste

- 1: Kofferaufbau
- 2: Bodenstruktur
- 3: Dach
- 4: Stirnwand
- 5: Seitenwand
- 6: Rückwandrahmen
- 7: Tür
- 8: Laderaum
- 9: Ladeboden
- 10: Bodenöffnung
- 11: Unterboden
- 12: Bodenlage
- 13: Querträger
- 14: Kunststoffelement
- 15: Anfahrnase
- 16: Drainageelement
- 17: Ablauföffnung
- 18: Einlauföffnung
- 19: Steg
- 20: Rand
- 21: Anschlagfläche
- 22: Abschrägung
- 23: Drainagekanal
- 24: Kanalabschnitt
- 25: Kanalabschnitt
- 26: Prallwand
- 27: Transportkältemaschine
- N: Nutzfahrzeug
- S: Strömung
- Z: Zugmaschine

## Patentansprüche

1. Kofferaufbau (1) eines Nutzfahrzeugs (N), insbesondere Lastkraftwagen, Anhänger oder Sattelauflieger, mit festen Seitenwänden (5), einer festen Stirnwand (4) und einem festen Dach (3), wobei eine Bodenstruktur (2) umfassend einen Ladeboden (9) zum Aufstellen von Ladung, einen Unterboden (11) zum Abschließen der Bodenstruktur (2) nach unten und eine zwischen dem Ladeboden (9) und dem Unterboden (11) vorgesehene Bodenlage (12), **dadurch gekennzeichnet, dass** der Unterboden (11) wenigstens eine Bodenöffnung (10) zum Ablaufen von in den Bereich der Bodenstruktur (2) eingedrungenen Wassers aus dem Kofferaufbau (1) aufweist.

2. Kofferaufbau nach Anspruch 1,
**dadurch gekennzeichnet, dass** die Seitenwände (5), die Stirnwand (4) und/oder das Dach (3) aus einem Paneel umfassend eine innere strukturgebende Decklage, eine äußere strukturgebende Decklage und eine zwischen der inneren Decklage und der äußeren Decklage vorgesehene Kernlage gebildet sind.

3. Kofferaufbau nach Anspruch 1 oder 2,
**dadurch gekennzeichnet, dass** der Kofferaufbau (1) als Kühlkofferaufbau umfassend eine Transportkältemaschine zum Ansaugen von Luft aus einem Laderaum (8) des Kofferaufbaus (1), Herunterkühlen der angesaugten Luft und Einblasen der heruntergekühlten Luft zurück in den Laderaum (8) ausgebildet ist.

4. Kofferaufbau nach einem der Ansprüche 1 bis 3,
**dadurch gekennzeichnet, dass** die wenigstens eine Bodenöffnung (10) in wenigstens einem Randbereich der Bodenstruktur (2) vorgesehen ist und dass, vorzugsweise, die wenigstens eine Bodenöffnung (10) in einer Richtung wenigstens im Wesentlichen senkrecht zur Bodenstruktur (2) unterhalb der Stirnwand (4), einer Seitenwand (5) und/oder einem Rückwandrahmen (6) vorgesehen ist.

5. Kofferaufbau nach einem der Ansprüche 1 bis 4,
**dadurch gekennzeichnet, dass** die wenigstens eine Bodenöffnung (10) in wenigstens einem Eckbereich der Bodenstruktur (2) vorgesehen ist und dass, vorzugsweise, die wenigstens eine Bodenöffnung (10) in einem Verbindungsbereich zwischen der Bodenstruktur (2) der Stirnwand (4), einer Seitenwand (5) und/oder einem Rückwandrahmen (6) vorgesehen ist.

6. Kofferaufbau nach Anspruch 4 oder 5,
**dadurch gekennzeichnet, dass** die Bodenlage (12) Querträger (13) und Kunststoffelemente (14) zwischen den Querträgern (23) aufweist und dass die wenigstens eine Bodenöffnung (10) seitlich neben der Bodenlage (12), insbesondere neben einem Querträger (13), vorgesehen ist.

7. Kofferaufbau nach einem der Ansprüche 1 bis 6,
**dadurch gekennzeichnet, dass** in der Bodenöffnung (10) ein Drainageelement (16) vorgesehen ist, dass das Drainageelement (16) einen eine Einlauföffnung (18) mit einer Ablauföffnung (17) verbindenden Drainagekanal (23) zum Ablaufen von Wasser aufweist und dass der Drainagekanal (23) derart gebogen ist, dass der Drainagekanal (23) keine direkte, geradlinige Verbindung zwischen Einlauföffnung (18) und Ablauföffnung (17), insbesondere in einer Richtung senkrecht zur Bodenstruktur (2), bereitstellt.

8. Kofferaufbau nach Anspruch 7,
**dadurch gekennzeichnet, dass** die Einlauföffnung (18) in einer Richtung senkrecht zur Bodenstruktur (2) gesehen vollständig neben der Ablauföffnung (17) vorgesehen ist.

9. Kofferaufbau nach Anspruch 7 oder 8,
**dadurch gekennzeichnet, dass** der Drainagekanal (23) wenigstens einen wenigstens im Wesentlichen parallel zur Bodenstruktur (2) verlaufenden Kanalabschnitt (24) aufweist und dass, vorzugsweise, der wenigstens im Wesentlichen parallel zur Bodenstruktur (2) verlaufende Kanalabschnitt (24) unterhalb der Einlauföffnung (18) und oberhalb der Ablauföffnung (17) vorgesehen ist.

10. Kofferaufbau nach einem der Ansprüche 7 bis 9,
**dadurch gekennzeichnet, dass** der Drainagekanal (23) derart ausgebildet ist, dass die Strömungsrichtung des ablaufenden Wassers entlang des Drainagekanals (23) wenigstens zweimal, insbesondere dreimal, um wenigstens 45°, vorzugsweise wenigstens 70°, insbesondere um etwa 90°, umgelenkt wird.

11. Kofferaufbau nach einem der Ansprüche 7 bis 10,
**dadurch gekennzeichnet, dass** in einer Richtung senkrecht über der Ablauföffnung (17) ein seitlich und nach oben geschlossener Kanalabschnitt (25) vorgesehen ist und dass, vorzugsweise, der geschlossene Kanalabschnitt (25) oberhalb des parallel zur Bodenstruktur (2) verlaufenden Kanalabschnitts (24) vorgesehen ist.

12. Kofferaufbau nach Anspruch 11,
**dadurch gekennzeichnet, dass** der wenigstens im Wesentlichen parallel zur Bodenstruktur (2) verlaufende Kanalabschnitt (24) wenigstens im Wesentlichen an den geschlossenen Kanalabschnitt (25) angrenzt und/oder dass der geschlossene Kanalabschnitt (25) in Richtung der Einlauföffnung (18) eine Prallwand (26) für von unten in das Drainageelement (16) spritzende Flüssigkeit bildet.

13. Kofferaufbau nach einem der Ansprüche 7 bis 12,
**dadurch gekennzeichnet, dass** die Einlauföffnung (18) zur Seite oder nach oben weist und/oder dass die Ablauföffnung (17) nach unten weist.

14. Kofferaufbau nach einem der Ansprüche 7 bis 13,
**dadurch gekennzeichnet, dass** die Unterseite des Drainageelements (16) oberhalb der Unterseite des Unterbodens (11) oder bündig mit der Unterseite des Unterbodens (11) abschließend vorgesehen ist.

15. Kofferaufbau nach einem der Ansprüche 7 bis 14,
**dadurch gekennzeichnet, dass** die Bodenöffnung (10) und das Drainageelement (16) derart korrespondierend zueinander ausgebildet sind, dass eine einzige definierte Einbaulage des Drainageelements (16) in der Bodenöffnung sichergestellt ist.
